# EUROPÄISCHE PATENTSCHRIFT

(11) **EP 2 681 342 B1**
(45) Veröffentlichungstag und Bekanntmachung des Hinweises auf die Patenterteilung: **18.07.2018**
(21) Anmeldenummer: 12715312.0
(22) Anmeldetag: 02.03.2012
(51) Int. Cl.: C22B 3/44

(54) **METALLTRENNUNGSVERFAHREN**
METAL SEPARATION METHOD
PROCÉDÉ DE SÉPARATION D'UN MÉTAL

(30) Priorität: 04.03.2011 AT 2972011
(43) Veröffentlichungstag der Anmeldung: 08.01.2014
(73) Patentinhaber: A.L.P. Technology AG, 8008 Zürich (CH)
(72) Erfinder: PRIOR, Joachim, A-6840 Götzis (AT); PRIOR, Adalbert, A-6842 Koblach (AT)
(74) Vertreter: Ellmeyer, Wolfgang
(86) Internationale Anmeldenummer: PCT/AT2012/050028
(87) Internationale Veröffentlichungsnummer: WO 2012/119174

(56) Entgegenhaltungen:
- US-A- 4 084 961
- US-A- 4 132 758
- US-A- 4 662 938
- US-A- 4 834 793
- US-A- 5 304 233
- US-A1- 2001 028 871
- US-A1- 2004 005 267

## Beschreibung

Die Erfindung betrifft ein Metalltrennungsverfahren.

Die Aufreinigung und Gewinnung von Metallen ist in vielerlei Hinsicht wesentlich für eine Vielzahl von industriellen Stoffkreisläufen. Die hydrometallurgische Aufreinigung und Metallgewinnung, insbesondere unter Verwendung von technischen Gasen oder Druckbegasungssystemen, wird anhand von Gold einleitend beschrieben.

Gold ist seit dem Altertum ein begehrtes Edelmetall, das für diverse Einsätze verwendet wird. Bekannte Goldförderverfahren sind beispielsweise Goldwaschen, Amalgamverfahren, Cyanidlaugung oder Anodenschlammverfahren. Daneben hat bei der Goldgewinnung, wie auch bei anderen Metallgewinnung- und Metalltrennverfahren, das Aufarbeiten von rezyklierten, gold- bzw. metallhaltigen Wertstoffen eine weiter zunehmende Bedeutung.

Beim Goldwaschen wird goldhaltiger Sand mit Wasser aufgeschlämmt. Da Gold schwerer ist als der umgebende Sand, setzt sich das Gold schneller am Boden ab und kann so abgetrennt werden.

Die Cyanidlaugung wird bei größeren Vorkommen, die eine industrielle Erschließung erlauben, angewendet. Vor dem Hintergrund, dass sich Gold in sauerstoffhaltiger Natriumcyanid-Lösung (Natriumsalz der Blausäure HCN) als Komplexverbindung löst, werden die metallhaltigen Sande staubfein gemahlen, aufgeschichtet und im Rieselverfahren mit der Extraktionslösung unter freiem Luftzutritt versetzt. Die kleinsten Metallteilchen werden hierbei zuerst aufgelöst, weil sie die relativ größte Reaktionsoberfläche haben. Das Edelmetall findet sich chemisch gebunden im hochgiftigen Sickerwasser. Nach Filtration und Ausfällung mit Zinkstaub erhält man es als braunen Schlamm, aus dem nach Waschen und Trocknen durch Reduktion Rohgold wird.

Im Anodenschlammverfahren wird Gold aus Anodenschlämmen, die bei der Raffination anderer Metalle, vor allem von Kupfer, zurückbleiben, gewonnen. Während der Elektrolyse wird das edle Gold nicht oxidiert und gelöst; es sammelt sich unter der Anode an.

Die Reinigung (Raffination) kann ebenfalls unter Verwendung verschiedener Verfahren durchgeführt werden. Bekannte Verfahren sind das Miller-Verfahren, die Wohlwill-Elektrolyse, Lösungsmittelextraktion und chemische Raffination (siehe beispielsweise Ullmann, Encyclopedia of Industrial Chemistry, Bd. A12, S. 510-512 (1989)).

Beim Miller-Verfahren wird ein Chlorgasstrom durch geschmolzenes unreines Gold geleitet, wodurch die Verunreinigungen als Chloride, die entweder gasförmig entweichen oder als Salze ausfallen, entfernt werden.

Bei der Wohlwill-Elektrolyse wird eine Anode aus verunreinigtem Gold und eine Kathode aus reinem Gold und ein Elektrolyt aus Tetrachlorgoldsäure verwendet. Nach Anlegen von Spannung scheidet sich hochreines Gold an der Kathode ab.

Bei der Lösungsmittelextraktion kann Tetrachlorgoldsäure aus wässriger Lösung mittels organischer Lösungsmittel wie beispielsweise Ether und Ester extrahiert werden. Eine vollständige Abtrennung von Verunreinigungen ist jedoch nicht möglich.

Beim chemischen Raffinieren werden Verunreinigungen wie Silber durch Lösen von Silber unter Verwendung von Salpetersäure (Salpetersäure-Scheidung) oder Schwefelsäure (Affination) abgetrennt. Relativ reines Gold kann erhalten werden, indem rohes Gold in Salzsäure mit einem Oxidationsmittel gelöst wird. Gold kann dann mit Oxalsäure oder Schwefeldioxid reduziert und ausgefällt werden. Ausfällen und Trennen müssen normalerweise öfter durchgeführt werden, um eine annehmbare Reinheit und insbesondere Feingoldqualität (z.B. 99,99 oder 99,999 Gew.-%) zu erreichen.

Die Fällung von Gold mit SO₂ aus einer Tetrachlorgoldsäure-Lösung erfolgt nach folgender Reaktionsgleichung (I):

3SO₂ + 2H[AuCl₄] + 6H₂O --> 2Au + 3H₂SO₄ + 8HCl (I)

Nach dem Stand der Technik wurde Gold aus wässriger Gold-Lösung wie folgt abgeschieden:
a) durch Fällung z.B. mit FeSO₄, Na₂S₂O₅, FeCl₂ oder Oxalsäure;
b) mittels Einleiten von SO₂ in die wässrige Goldlösung, wie z.B. aus US4662938 bekannt. Das unter b) erwähnte Verfahren weist als wesentlichen Vorteil gegenüber den anderen Fällungsmittel auf, dass Gold selektiv aus der Goldlösung gefällt werden kann. Zur Begasung von Reaktoren werden üblicherweise zwangsbegaste System eingesetzt. Nachteilig bei bisher eingesetzten zwangsbegasten Systemen ist, dass der in die Goldlösung hineinragende Gaseinleitkörper (z.B. Lanze, Brause) zum Einleiten von SO₂ durch das bei Kontakt mit SO₂ spontan ausfallende Gold verstopfen kann, dass ein Hohlwellenrührer, der zum Einleiten von SO₂ ebenfalls verwendet werden könnte, verstopfen kann oder sich innenseitig mit Gold belegt (schwer reinigbar), dass das Gold in den Gaszuleitungen und/oder Gaszirkulationsleitungen ausfallen kann und diese mit Gold belegen oder verstopfen kann, dass Membranen der Gaszirkulationspumpen mit Gold belegt werden können bzw. bereits nach relativ kurzer Zeit Verschleißerscheinungen zeigen und daher teure Verschleißteile auch unter arbeitssicherheitstechnischen Aspekten wie zum Beispiel einer möglichen Leckage von giftigem Prozessgas präventiv ausgetauscht werden müssen usw.

Die oben angeführten praktischen Problemstellungen des Zwangsbegasens treten nicht nur bei der Gewinnung von Gold auf, sondern in sehr ähnlicher Form auch beim Lösen von Gold, beim Lösen von Silber, beim Lösen von Lithiumcarbonat beim Lösen von Platingruppenmetallen und beim Lösen und der Ausfällung von anderen Metallen.

Aufgabe der Erfindung ist die Bereitstellung eines Verfahrens zur Metalltrennung ohne den Nachteilen des Zwangsbegasens.

Es wird offenbart, dass das Vermischen von Flüssigkeit und Prozessgas nach dem "Oberflächenbegasungs"-Verfahren durchgeführt wird und dass der Reaktor Folgendes umfasst:
- zumindest einen Gaseinlass und zumindest einen Gasauslass, wobei sich der zumindest eine Gaseinlass und der zumindest eine Gasauslass über dem maximalen Füllniveau des Reaktors befinden,
- zumindest einen Flüssigkeitseinlass und zumindest einen Flüssigkeitsauslass, wobei sich Letzterer vorzugsweise am Boden des Reaktors befindet,
- einen Rührer,
- zumindest ein Strömungsstörmittel, das im Zusammenspiel mit dem Rührer eine homogene Einrührung des Prozessgases ermöglicht.

Die Verfahrensschritte werden dadurch durchgeführt, dass das Vermischen von Flüssigkeit und Prozessgas nach dem "Oberflächenbegasungs"-Verfahren durchgeführt wird und
- das Gas über zumindest einen Gaseinlass über dem maximalen Füllniveau des Reaktors eingeleitet wird und über zumindest einen Gasauslass über dem maximalen Füllniveau des Reaktors abgeleitet wird;
- die Flüssigkeit über zumindest einen Flüssigkeitseinlass eingeleitet und über zumindest einen Flüssigkeitsauslass ausgeleitet wird, wobei die Ableitung vorzugsweise über den Boden des Reaktors erfolgt;
- die Flüssigkeit durch einen Rührer gerührt wird;
- wobei eine homogene Einrührung des Prozessgases durch zumindest ein Strömungsstörmittel im Zusammenspiel mit dem Rührer ermöglicht wird.

Die Einleitung des Prozessgases erfolgt gemäß dem "Oberflächenbegasungs"-Verfahren oberhalb des Flüssigkeitsniveaus im Reaktor (d.h. oberhalb des maximalen Füllniveaus des Reaktors, das die Flüssigkeit nicht überschreitet). Dies hat den großen Vorteil, dass das zu trennende Metall mit dem mit dem zu trennenden Metall reagierenden Prozessgas in der Flüssigkeit und nicht gleich beim Einleiten des Prozessgases bei der Einleitungsstelle reagiert. Eine Verstopfung der Zuleitung des Prozessgases kann mit dieser Anordnung ausgeschlossen werden.

Die Anordnung von zumindest einem Strömungsstörmittel im Reaktor führt im Zusammenspiel mit dem Rührer zu einer homogenen Einrührung des Prozessgases. Durch diese Anordnung wird das Gas homogen in der Flüssigkeit verteilt, ohne sich an irgendeiner Stelle in der Flüssigkeit in höherer Konzentration zu befinden. Bei herkömmlichen Rührern und herkömmlichen Reaktoren mit oder ohne konventionellen Strömungsstörmittel erfolgt die Einrührung von Gas bei der Rührachse, meist unter Ausbildung einer Trombe (Vortex-Effekt); das eingerührte Gas wird nur sehr spärlich an die anderen Bereiche der Flüssigkeit verteilt. Die Anordnung von zumindest einem Strömungsstörmittel, das ein Oberflächeneffekt-Strömungsstörmittel ist, stört den Fluss der Flüssigkeit in der Art, dass das Gas von der Oberfläche in die gesamte Flüssigkeit verteilt wird. Das Mitrotieren der Flüssigkeit mit dem Rührer wird dabei gestört, zusätzlich erzeugt das Oberflächeneffekt-Strömungsstörmittel einen so genannten "Stauwehr-Effekt". Es entsteht eine homogene Verteilung des Gases in der Flüssigkeit bereits bei geringen Drehzahlen. Am Rührer selbst können ein oder mehrere Rührblätter angebracht sein, die ebenfalls zu besseren Einrührung des Gases dienen. Durch diesen Vorgang erfolgt eine so genannte "Oberflächenbegasung".

"Oberflächenbegasung" ist daher so definiert, dass das Gas über die Oberfläche in die Flüssigkeit eingebracht wird, wobei die Flüssigkeit so gerührt wird, dass die Flüssigkeit nur eine geringe, aussermittige Trombe oder im Falle des später beschriebenen "Up-Pumping Systems" eine "wandnahe Trombe" ausbildet und dennoch im Zusammenspiel zwischen Rührer und Strömungsstörmitteln so bewegt wird, dass das über der Flüssigkeit befindliche Gas in die Flüssigkeit eingerührt wird. Das Gegenteil ist die "Zwangsbegasung", bei welcher das Gas direkt in die Flüssigkeit eingeleitet wird.

Diese Oberflächenbegasung ist ein zentrales Element der Erfindung.

Bei zwangsbegasten Systemen wird das Gas unter Druck in die Flüssigkeit eingetragen. Typischerweise erfolgt dies mit Hilfe von Tauchrohren, Einleitrohren oder Begasungsringen, bei denen das Gas unterhalb der Flüssigkeitsoberfläche austritt. Der erforderliche Gasdruck ergibt sich aus der gewünschten, einzutragenden Gasmenge sowie aus der Notwendigkeit, den hydrostatischen Druck der Flüssigkeit am Einleitpunkt zu überwinden. Die Wahl des Gaseinleitsystems hängt von einer Reihe von Parametern ab, wie zum Beispiel Ausführbarkeit in einem bestimmten Werkstoffsystem, Montierbarkeit, Verstopfungsneigung und so weiter. Selbstverständlich beeinflusst auch die Wahl des Rührsystems die Art der Gaseinleitung.

Selbstansaugende Systeme nutzen strömungstechnische Effekte, um Gas, welches sich oberhalb der Flüssigkeitsoberfläche befindet, in die Flüssigkeit einzutragen. Nach dem Prinzip der Selbstansaugung arbeitet beispielsweise der Hohlwellenrührer. Aufgrund des Unterdrucks, der sich an den Spitzen der Rührerflügel ergibt, wenn der Rührer rotiert (Bernoulli-Effekt), wird Gas durch die im Gasraum offene und hohle Rührwelle angesaugt und tritt nahe bei den Enden der Rührerflügel aus. Durch geeignete Gestaltung des Rührers und bei Wahl einer optimalen Rührerdrehzahl kann mit dieser Methode ein guter Gaseintrag verwirklicht werden.

Eine weitere Form der selbstansaugenden Begasung ist die so genannte "Selbstbegasung". Dabei nutzt man im Wesentlichen den Effekt der Trombenbildung beim Rühren, um Gas über die Oberfläche in die Flüssigkeit einzuziehen. Einbauteile wie konventionelle Stromstörer wirken üblicherweise einer Trombenbildung entgegen. Bei genügend hohem Energieeintrag über den Rührer kann, mit oder ohne konventioneller Stromstörer, eine entsprechende Trombe erzeugt werden. Wie auch beim Begasen über Hohlwellenrührer ist auch bei der Selbstbegasung eine ausreichende, relativ hohe Drehzahl des Rührers erforderlich, um eine signifikante Gasmenge in das Fluid einzutragen. Die Selbstbegasung ist hinsichtlich der Gasmengen, die überhaupt eingetragen werden können, sehr begrenzt und für technische Anwendungen in vielen Fällen nicht ausreichend.

Eine Weiterentwicklung der selbstansaugenden Begasung ist das Begasen über die Flüssigkeitsoberfläche, das so genannte Oberflächenbegasen.

Ein Oberflächenbegasungs-System besteht aus einem Oberflächeneffekt-Strömungstörmittel und einem optimierten, je nach Reaktorgröße ein- oder mehrstufigen Rührer. Beim Strömungstörmittel handelt es sich um einen Einbauteil, welcher in Form eines besonders geformten "Paddels", z.B. in Form eines umgekehrten "L", nahe der Flüssigkeitsoberfläche eingebaut ist. Das "Paddel" ist dabei in Richtung der Rührerwelle spezifisch ausgerichtet (z.B. der Schenkel eines umgekehrten "L") und bildet so im Wesentlichen ein breites, im Trombenbereich jedoch nicht allzu tief reichendes Strömungstörmittel, das damit nahezu ausschließlich auf die Flüssigkeitsoberfläche wirkt. Das Strömungsstörmittel kann sich vollständig unter dem Flüssigkeitsniveau befinden als auch teilweise über und teilweise unter dem Flüssigkeitsniveau befinden.

Die Funktionsweise der Oberflächenbegasungs-Technologie kann einfach verdeutlicht werden: Das sich im Behälter drehende Rührorgan erzeugt neben Axial- und Radialströmungen auch eine ausgeprägte Tangentialströmung. Diese Tangentialströmung ist bei konventionellen Apparaten verantwortlich für die Ausbildung einer zentrischen Trombe. Das Strömungstörmittel wirkt nun auf die Ausbildung und die Lage der Trombe ein: Während die Trombe beim konventionellen Rührbehälter im Wesentlichen um die Rührerwelle rotiert und damit nahezu wirkungslos bezüglich des Gaseintrags ist, verhindert das Strömungstörmittel die Bildung der zentralen Trombe. Es entsteht stattdessen auf der Rückseite des "Paddels" eine Zone mit einer ausgeprägten Rotationsströmung, die eine Trombe in der Flüssigkeit bildet (Vortex-Effekt). Dieser Strudel ist außermittig bezüglich des Rührbehälters und endet im Bereich der Flügel des oberen Rührorgans (Dispergierstufe). Diese außermittige Trombe zieht große Mengen Gas von der Oberfläche in die Flüssigkeit ein.

Das Paddel wirkt zudem wie ein "Stauwehr", das von der Flüssigkeit teilweise überströmt wird. Ähnlich wie bei einem Wehr in einem fließenden Gewässer bildet sich hinter dem Strömungstörmittel eine Zone, in der intensiv Gas in die Flüssigkeit eingeschlagen wird (Stauwehr-Effekt). Beide Effekte zusammen, die Bildung einer außermittigen Trombe (Vortex-Effekt) und der "Stauwehr-Effekt", sorgen, im Gegensatz zu der zuvor beschriebenen Selbstbegasung (basierend lediglich auf Vortex-Effekt), für einen intensiven Gaseintrag über die Flüssigkeitsoberfläche in die Flüssigkeit.

Es ist möglich, das System Rührer/Strömungstörmittel so zu konzipieren, dass die Axialbewegung der Flüssigkeit um die Rührachse von oben nach unten verläuft als auch umgekehrt. In herkömmlichen Systemen wird die Flüssigkeit entlang der Rührachse von oben nach unten bewegt und entlang der Wand von unten nach oben bewegt. Wird die Flüssigkeit entlang der Rührachse von unten nach oben bewegt und entlang der Wand von oben nach unten bewegt, spricht man auch von einem "Up-Pumping"-System. Dabei wird das Gas entlang der Wand bzw. durch wandnah wirkende Oberflächeneffekt-Strömungsstörmittel eingezogen. In dieser Erfindung können beide Verfahren verwendet werden.

Es wird offenbart, dass das zumindest eine Strömungsstörmittel an der Wand des Reaktors angebracht sein oder über einen Reaktorstutzen eingehängt sein oder sich vom Reaktordeckel nach unten erstrecken kann. Dies verhindert am effizientesten das Mitrotieren der Flüssigkeit mit dem Rührer und trägt demnach zu einer homogenen Verteilung des Gases in der Flüssigkeit bei. Dieses Strömungsstörmittel kann aus prozesstechnisch geeigneten Materialien (chemische Beständigkeit, Oberfläche, etc.) hergestellt werden, z.B. Tantal, Titan, Edelstahl, usw., bevorzugt jedoch aus technischem Email. Die Strömungstörmittel sind bevorzugt totraumfrei oder allenfalls totraumarm ausgeführt.

Es wird offenbart, dass das zu trennende Metall aus einer das zu trennende Metall enthaltenden Lösung als Metall oder Metallsalz ausgefällt werden kann. Dies hat den Vorteil, dass die Gaszuleitung nicht verstopfen oder belegen kann, da das Gas über die Oberfläche der Flüssigkeit eingebracht wird und so nur in der Flüssigkeit mit dem zu trennenden Metall reagieren kann.

Es wird offenbart, dass das zu trennende Metall aus einem das zu trennende Metall enthaltenden Gemisch gelöst werden kann. In solch einer Ausführungsform wird das Metall in Lösung dispergiert und durch das Oberflächenbegasen mit dem Prozessgas in Kontakt gebracht, wodurch es in Lösung geht. Das Lösen erfolgt homogen in der gesamten Flüssigkeit und überwindet den bisherigen Nachteil der örtlich begrenzten Auflösung bei der Einleitstelle des Prozessgases. Weiters können allfällige unlösliche Komponenten oder Partikel die Gaszuleitung nicht verstopfen, belegen oder die Einleitstelle des Prozessgases in sonstiger Art und Weise affektieren. Kann das zu trennende Metall nicht dispergiert werden (z.B. Partikelgröße, Dichte) und liegt das Metall beispielsweise am Reaktorboden, so drückt die Oberflächenbegasung ausreichend Prozessgas bis zur Metalloberfläche am Reaktorboden.

Gemäß der Erfindung umfasst das Metalltrennungsverfahren folgende Schritte:
+ Einbringen des zu trennenden Metalls gemeinsam mit einer Flüssigkeit in einen Reaktor;
+ Hinzufügen von mit dem zu trennenden Metall reagierendem Prozessgas und Vermischen,
+ Gewinnung des zu trennenden Metalls,
wobei
das Vermischen von Flüssigkeit und Prozessgas nach dem "Oberflächenbegasungs"-Verfahren durchgeführt wird und
- das Gas über zumindest einen Gaseinlass über dem maximalen Füllniveau des Reaktors eingeleitet wird und über zumindest einen Gasauslass über dem maximalen Füllniveau des Reaktors abgeleitet wird;
- die Flüssigkeit über zumindest einen Flüssigkeitseinlass eingeleitet und über zumindest einen Flüssigkeitsauslass ausgeleitet wird, wobei die Ableitung vorzugsweise über den Boden des Reaktors erfolgt;
- die Flüssigkeit durch einen Rührer gerührt wird;
- wobei eine homogene Einrührung des Prozessgases durch zumindest ein Strömungsstörmittel im Zusammenspiel mit dem Rührer ermöglicht wird;
dass das zu trennende Metall aus einer das zu trennende Metall enthaltenden Lösung als Metall oder Metallsalz ausgefällt wird und
dass Gold ausgefällt wird, wobei das Verfahren folgende Schritte umfasst:
(i) Einbringen einer wässrigen Goldlösung über zumindest einen Flüssigkeitseinlass in einen Reaktor,
(ii) Verschließen des Reaktors,
(iii) Austausch des Gases im Kopfraum durch Prozessgas, das SO₂ umfasst,
   wobei das Gas über zumindest einen Gaseinlass über dem maximalen Füllniveau des Reaktors eingeleitet wird und über zumindest einen Gasauslass über dem maximalen Füllniveau des Reaktors abgeleitet wird,
(iv) Rühren des Gemisches, wodurch eine Selbstbegasung (Oberflächenbegasung) des Gemisches erfolgt, wobei eine homogene Einrührung des Prozessgases durch zumindest ein Strömungsstörmittel im Zusammenspiel mit dem Rührer ermöglicht wird,
(v) Nachdosieren von Prozessgas je nach Bedarf,
(vi) Beenden der Umsetzung, wenn kein SO₂ mehr verbraucht wird,
(vii) Abkühlen/Erwärmen auf Raumtemperatur,
(viii) Gewinnen des Golds.

Es wird offenbart, dass Gold ausgefällt werden kann, wobei das Verfahren folgende Schritte umfasst:
(i) Einbringen einer wässrigen Goldlösung in einen Reaktor, der Folgendes umfasst:
   - zumindest einen Gaseinlass und zumindest einen Gasauslass, wobei sich der zumindest eine Gaseinlass und der zumindest eine Gasauslass über dem maximalen Füllniveau des Reaktors befinden,
   - zumindest einen Flüssigkeitseinlass und zumindest einen Flüssigkeitsauslass, wobei sich Letzterer vorzugsweise am Boden des Reaktors befindet,
   - einen Rührer,
   - zumindest ein Strömungsstörmittel, das im Zusammenspiel mit dem Rührer eine homogene Einrührung des Prozessgases ermöglicht,
(ii) Verschließen des Reaktors,
(iii) Austausch des Gases im Kopfraum durch Prozessgas, das SO₂ umfasst,
(iv) Rühren des Gemisches, wodurch eine Selbstbegasung (Oberflächenbegasung) des Gemisches erfolgt,
(v) Nachdosieren von Prozessgas je nach Bedarf,
(vi) Beenden der Umsetzung, wenn kein SO₂ mehr verbraucht wird,
(vii) Abkühlen/Erwärmen auf Raumtemperatur,
(viii) Gewinnen des Golds.

Das Verfahren umfasst dabei folgende Schritte:
(i) Einbringen einer wässrigen Goldlösung über zumindest einen Flüssigkeitseinlass in einen Reaktor,
(ii) Verschließen des Reaktors,
(iii) Austausch des Gases im Kopfraum durch Prozessgas, das SO₂ umfasst, wobei das Gas über zumindest einen Gaseinlass über dem maximalen Füllniveau des Reaktors eingeleitet wird und über zumindest einen Gasauslass über dem maximalen Füllniveau des Reaktors abgeleitet wird,
(iv) Rühren des Gemisches, wodurch eine Selbstbegasung (Oberflächenbegasung) des Gemisches erfolgt, wobei eine homogene Einrührung des Prozessgases durch zumindest ein Strömungsstörmittel im Zusammenspiel mit dem Rührer ermöglicht wird,
(v) Nachdosieren von Prozessgas je nach Bedarf,
(vi) Beenden der Umsetzung, wenn kein SO₂ mehr verbraucht wird,
(vii) Abkühlen/Erwärmen auf Raumtemperatur,
(viii) Gewinnen des Golds.

Mit diesem Verfahren kann Gold gewonnen werden, durch SO₂ wird Gold selektiv ausgefällt. Raumtemperatur ist hierin mit ca. 25 °C definiert. Das Prozessgas besteht vorzugsweise aus SO₂ in technischer Qualität. Wird der Reaktorkopfraum nur zu einem geringen Anteil mit Prozessgas ersetzt, z.B. nur zu ca. 30%, so berührt dies den Prozess von Prinzip wegen nicht, jedoch verringern sich die Zeit-/Ausbeutekurven wesentlich.

In einer anderen Ausführungsform der Erfindung kann die wässrige Goldlösung eine wässrige Lösung von H[AuCl₄] sein. Eine Tetrachlorgold-Lösung kann relativ einfach aus Gold und Gemengen aus Gold und anderen Metallen hergestellt werden, beispielsweise durch Lösen von Gold in HCl und Cl₂ oder in Königswasser.

In einer Ausbildung der Erfindung kann das Verfahren bei von -10 bis +120 °C durchgeführt werden. Die Ausfällungsreaktion von Gold ist eine exotherme Reaktion. Die Temperaturführung erfolgt mittels einer am Reaktor vorhandenen Temperaturregelanlage, die sowohl heizen als auch kühlen kann. Ein Bereich von -10 bis +120 °C hat sich als vorteilhaft erwiesen.

In einer anderen Ausbildung der Erfindung kann das Verfahren in einem Temperaturbereich von 40 bis 90 °C durchgeführt werden. In diesem Temperaturbereich findet eine bessere Umsetzung statt.

In einer Ausführungsform der Erfindung kann der Druck durch Einlassen von Prozessgas bzw. Ablassen eines Überdrucks auf 0,05 bis 6 bar geregelt werden. Bei der Reaktion nach Reaktionsschema (I) wird SO₂ verbraucht, d.h. der Gesamtdruck nimmt ab, da das entstehende HCl in Wasser gelöst wird. Die Druckänderungen werden durch Einlassen von weiterem Prozessgas bzw. Ablassen von Überdruck auf einen Bereich von 0,05 bis 6 bar geregelt. Bei diesen Drücken erfolgt die Reaktion in annehmbarer Geschwindigkeit.

In einer anderen Ausführungsform der Erfindung kann der Druck durch Einlassen von Prozessgas bzw. Ablassen eines Überdrucks auf 0,5 bis 4 bar geregelt werden. Diese Drücke sind besser beherrschbar, und die Reaktion findet vollständiger statt.

In einer anderen Ausführungsform der Erfindung kann das Rühren, je nach Reaktorgröße, mit einer Geschwindigkeit von 10 bis 800 U/min erfolgen. Bei diesen Rührgeschwindigkeiten erfolgt eine homogene Einrührung des Prozessgases in die Flüssigkeit, um dort eine rasche Reaktion zu ermöglichen. Die Rührgeschwindigkeit wird je nach Reaktorgröße, Flüssigkeitsviskosität und Feststoffgehalt angepasst.

In wiederum einer anderen Ausführungsform der Erfindung kann das Rühren, je nach Reaktorgröße, mit einer Geschwindigkeit von 100 bis 300 U/min erfolgen. Bei diesen Drehzahlen erfolgt eine hervorragende Einrührung des Prozessgases in die Flüssigkeit.

In einer Ausbildung der Erfindung können nach Schritt (viii) die im Überstand verbliebenen Edelmetalle gewonnen werden, z.B. allenfalls in der salzsauren Lösung enthaltene Platingruppenmetalle wie Platin, Palladium, Rhodium, Iridium und Ruthenium. Dies kann durch folgende Schritte durchgeführt werden:
- 1. Schritt: Oxidieren mit Cl₂, Reduzieren des Ir(IV), Fällen mit NH₄Cl, wobei als Präzipitat (NH₄)₂PtCl₆ erhalten wird, welches z.B. mit H₂ oder Glühen zu Platin reduziert werden kann, wobei in der Lösung Pd(II), Rh(III), Ir(III), Ru(III) verbleiben;
- 2. Schritt: Oxidation des Ir(III), wobei als Präzipitat (NH₄)₂IrCl₆ erhalten wird, welches z.B. mit H₂ oder Glühen zu Iridium reduziert werden kann, wobei in der Lösung Pd(II), Rh(III), Ru(III) verbleiben;
- 3. Schritt: Oxidation mit Cl₂, Fällen mit NH₄Cl, wobei als Präzipitat (NH₄)₂PdCl₆ erhalten wird, welches z.B. mit H₂ oder Glühen zu Palladium reduziert werden kann, wobei in der Lösung Rh(III), Ru(IV) verbleiben;
- 4. Schritt: Kristallisieren, wobei als Kristallat (NH₄)₂RhCl₆ erhalten wird, welches z.B. mit H₂ zu Rhodium reduziert werden kann, wobei in der Lösung Ru(IV) verbleibt;
- 5. Schritt: Entfernen von NH₄⁺, oxidierende Destillation, wobei als Destillat RuO₄ erhalten wird.

In einer Ausführungsform der Erfindung kann das Gold durch Filtration gewonnen werden. Das Gold wird durch Rühren der Suspension bereits im Fällungsreaktor selbst so aufgeschlämmt, dass es aus dem Reaktor ausgebracht und filtriert werden kann.

In einer Ausbildung der Erfindung kann die wässrige Goldlösung einen Goldgehalt von 5 bis 450 g/l aufweisen. Mit solchen Goldkonzentrationen sind gute Ergebnisse und geringste Überstandsvolumina (in weiterer Folge Abwasservolumina) zu erzielen.

In einer anderen Ausbildung der Erfindung kann die wässrige Goldlösung einen Goldgehalt von 150 bis 400 g/l aufweisen. Diese Goldgehalte sind sehr einfach zu handhaben.

Es wird offenbart, dass das abgeschiedene Gold eine Reinheit von > 99,99 % aufweisen kann. Diese Reinheit ist so gut, dass eine weitere Aufreinigung vor dem Verkauf unterbleiben kann und das gefällte Gold nach einem Waschschritt mit entionisiertem Wasser gleich weiterverarbeitet, z.B. getrocknet, eingeschmolzen und in die gewünschte Goldproduktform gegossen, werden kann.

Es wird offenbart, dass der Überstand nach der Goldfällung einen Rest-Goldgehalt von < 5 ppm aufweisen, bei entsprechender Prozessführung einen Rest-Goldgehalt von < 2 ppm oder auch < 0,6 ppm. Dieser geringe Rest-Goldgehalt ermöglicht eine hohe Goldausbeute sowie eine für Edelmetallraffinerien wichtige hohe Metallsicherheit und damit ein wirtschaftliches Arbeiten.

In einer Ausbildung der Erfindung kann vor Schritt (i) die wässrige Goldlösung wie folgt gewonnen werden:
a) durch Lösen von Gold mit Cl₂ in HCl und/oder HBr; oder
b) durch Lösen von Gold in Königswasser und anschließendes Entfernen des Nitrats; oder
c) elektrochemisches Lösen von Gold.

Das Lösen von Gold mit Cl₂ in HCl und/oder HBr führt direkt zu einer Tetrachlorgold-Lösung, die direkt im Reaktor verwendet werden kann. Eventuell vorhandenes Silber fällt als unlösliches AgCl aus.

Das Lösen von Gold in Königswasser führt ebenfalls zu Tetrachlorgoldsäure, jedoch muss vor jedweder Goldfällung aus Goldsäuren die beim Königswasserprozess unvermeidlichen Nitratanteile (HNO₃) zerstört werden. Die Entfernung der

Nitratanteile geschieht beispielsweise durch Kochen unter HCl-Überschuss.

Ein elektrochemisches Lösen von Gold liefert, je nach Einsatzmaterial, ebenfalls eine ausreichend reine Goldlösung.

Es wird offenbart, dass Li₂CO₃ unter Verwendung von CO₂ als Prozessgas aufgelöst werden kann. Dies führt zu sehr reinem, natriumarmen Li₂CO₃, das entweder direkt verwendet oder einfach zu Li weiterverarbeitet werden kann.

Es wird offenbart, dass Gold mit HCl und/oder HBr und Cl₂ als Prozessgas gelöst werden kann. Auf diese Weise kann eine sehr reine Goldlösung gewonnen werden.

Es wird offenbart, dass Silber mit HNO₃ und O₂ als Prozessgas gelöst werden kann. Dies führt zu einer silberreichen Nitratlösung, aus der nachfolgend nach bekannten chemischen Verfahren z.B. Silberelektrolyt, Feinsilber oder hochreines Silbernitrat gewonnen werden kann.

Es wird offenbart, dass Platingruppenmetalle (Pt, Pd, Ir, Rh, Ru, Os) mit HCl und/oder HBr und Cl₂ als Prozessgas gelöst werden können. Dadurch kann eine rasche und beinahe vollständige Auflösung von Platingruppenmetallen erreicht werden. Die entstandene Lösung kann dann verwendet werden, um die Platingruppenmetalle durch Ausfällen aufzureinigen bzw. zu raffinieren.

Weiters wird eine Vorrichtung zur Verwendung in einem vorher beschriebenen Verfahren offenbart, wobei die Vorrichtung Folgendes umfasst:
- zumindest einen Gaseinlass und zumindest einen Gasauslass, wobei sich der zumindest eine Gaseinlass und der zumindest eine Gasauslass über dem maximalen Füllniveau des Reaktors befinden,
- zumindest einen Flüssigkeitseinlass und zumindest einen Flüssigkeitsauslass, wobei sich Letzterer vorzugsweise am Boden des Reaktors befindet,
- einen Rührer,
- zumindest ein Strömungsstörmittel, das im Zusammenspiel mit dem Rührer eine homogene Einrührung des Prozessgases ermöglicht.

Mit dieser Vorrichtung sind alle zuvor beschriebenen Vorteile zu erzielen.

Bei der Vorrichtung kann das zumindest eine Strömungsstörmittel an der Wand des Reaktors angebracht sein oder über einen Reaktorstutzen eingehängt sein oder sich vom Reaktordeckel nach unten erstrecken.

Weiters wird die Verwendung einer zuvor beschriebenen Vorrichtung in einem Metalltrennungsverfahren offenbart.

Weiters wird die Verwendung einer vorher beschriebenen in einem vorher beschriebenen Verfahren offenbart.

### Beschreibung der Figur

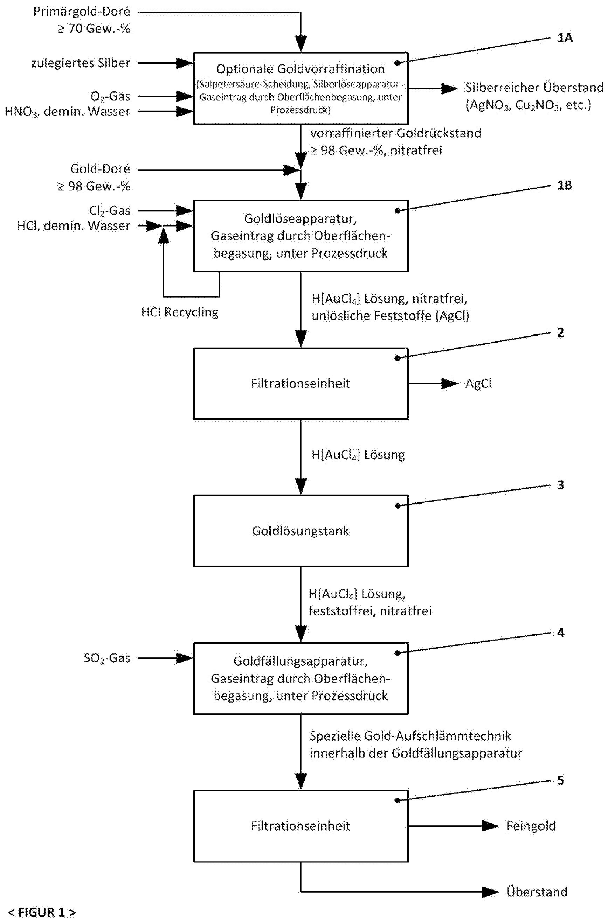

Fig. 1 zeigt ein Flussdiagramm der Goldgewinnung. Dabei bezeichnen die Bezugszeichen

### 1A: Optionale Goldvorraffination

Allfälliges Primärgold mit z.B. 75 Gew.-% Goldgehalt kann dabei durch Salpetersäure-Scheidung vorraffiniert werden:
Bei der Salpetersäure-Scheidung wird das Primärgold-Doré zuerst durch Zulegieren von Silber auf einen Goldgehalt von ca. 20-25 Gew.-% in einem Schmelzofen "verdünnt" und als Granalien abgegossen. Unter Dore versteht man hierin ein Gemenge bzw. eine Mischung an Edelmetallen, welches bzw. welche nicht einer expliziten, standardisierten Legierung, z.B. wie 14 Karat Gold, entspricht, oder der Begriff Dore steht für teilraffinierte Edelmetalllegierungen, z.B. Gold-Dore für teilraffiniertes Gold mit 90 Gew.-% Goldgehalt nach einem Erst- und/oder Zweitaufreinigungschritt, der Rest könnte Silber und/oder Nichteisenmetalle und/oder Platingruppenmetalle sein. Die resultierende, vorraffinierte Silber-/Goldlegierung wird salpetersauer aufgelöst, der unlösliche Goldrückstand abfiltriert und in weiterer Folge z.B. salzsauer (HCl/Cl₂) oder mittels Königswasser (HCl/HNO₃) aufgelöst. Aus der daraus resultierenden Goldlösung wird letztlich Feingold gefällt (Ullmanns Enzyklopädie der technischen Chemie, Band 12, (1979)).

Mittels einer speziellen, geschlossenen Silberlöseapparatur kann oben genannte Silber-/Goldlegierung (ca. 20-25 Gew.-% Gold) im System HNO₃/O₂ unter Verwendung der Oberflächenbegasung und unter Druck im Normalbetrieb de facto ohne Emission von Stickstoffoxiden gelöst werden. Dabei werden im Goldrückstand für den nachfolgenden Prozessschritt 1B taugliche Goldgehalte erhalten. Der Überstand, silberreiche Nitratlösung, kann innerhalb einer Silberraffinerie, z.B. als Silberelektrolyt, eingesetzt werden.

Diese spezielle Silberlöseapparatur wird auch als "Dissolvomat Ag" bezeichnet und unter anderem auch für die Herstellung von silberreichen Nitratlösungen für die Silbergewinnung eingesetzt.

### 1B: Goldlöseapparatur

Gold-Doré von ≥ 98 Gew.-% wird z.B. mittels HCl/Cl₂ aufgelöst. Der Druckbegasungsprozess erfolgt dabei mittels eines "Oberflächenbegasungs"-Verfahrens. Eine Nitratzerstörung wie beim Königswasserprozess ist von Prinzip wegen nicht notwendig. Diese Goldlöseapparatur wird auch als "Dissolvomat Au" bezeichnet.

### 2: Filtrationseinheit

AgCI wird abfiltriert. Die Filtration kann ein- oder mehrstufig erfolgen.

### 3: Goldlösetank

Bereitstellungstank für feststoff- und nitratfreie Goldlösung.

### 4: Goldfällungsapparatur

Selektive Goldfällung der Lösung mittels SO₂. Der Druckbegasungsprozess erfolgt dabei mittels eines "Oberflächenbegasungs"-Verfahrens. Diese Goldfällungsapparatur wird auch als "Aureomat" bezeichnet.

### 5: Filtrationseinheit

Das gewonnene Gold wird abfiltriert. Die Filtration kann ein- oder mehrstufig erfolgen.

### BEISPIELE

### Beispiel 1

Gewinnung von Gold aus einer Tetrachlorgoldsäure-Lösung mittels eines als "Aureomat" bezeichneten Reaktors.

Ein mit einem Rührer, einer Temperaturregelanlage, zwei Gaseinlässen (SO₂, N₂), einem Gasauslass, zwei Flüssigkeitseinlässen (H[AuCl₄], entionisiertes Wasser), einem Flüssigkeitsauslass, einem Druckmessgerät, Durchflussmessgeräten für Flüssigkeiten und Gase und Strömungsstörmittel ausgestatteter Reaktor mit einem Nennvolumen von 440 l wird mit 360 bis 440 l einer wässrigen Goldlösung befüllt. Es kann auch ein kleinerer Reaktor verwendet werden, z.B. können in einen kleineren Reaktor mit einem Nennvolumen von 275 l 225 bis 275 l einer wässrigen Goldlösung eingefüllt werden. Die Reaktorgröße ist skalierbar, ein Bereich von 15 bis 800 l hat sich als vorteilhaft erwiesen, die Reaktorgröße kann jedoch je nach gewünschter Ausgangsmenge skaliert werden. Das Gold liegt in Form von Tetrachlorgoldsäure vor. Der Reaktor wird verschlossen, und das Gas im Kopfraum wird fast vollständig durch Prozessgas ersetzt oder der Kopfraum mit Prozessgas befüllt. Das Prozessgas wird durch den Gaseinlass eingeleitet. Das Prozessgas besteht vorzugsweise aus SO₂ in technischer Qualität. Wird der Kopfraum nur zu einem geringen Anteil mit Prozessgas ersetzt, z.B. nur zu ca. 30%, so berührt dies den Prozess von Prinzip wegen nicht, jedoch können sich die Zeit-/Ausbeutekurven wesentlich verringern. Der Gaseinlass befindet sich über dem Füllniveau des Reaktors. Jetzt wird die Rührung eingeschaltet und das Gemisch bei 200 U/min gerührt, der Prozess startet üblicherweise bereits bei Raumtemperatur und während der Aufheiz- und/oder Abkühlphase. Die Goldfällung erfolgt nach der Reaktionsgleichung (I). Das SO₂ wird durch die Reaktion mit der Tetrachlorgoldsäure verbraucht, was sich in einem Druckabfall bemerkbar macht. Der Druck im Reaktor beträgt ca. 1,5 bar. Das Prozessgas wird entsprechend nachdosiert, bis kein SO₂-Verbrauch mehr messbar ist. Im Normalbetrieb des Fällungsprozesses bleibt das System geschlossen - ein Entlassen von Prozessgas erfolgt nicht. Ist kein SO₂-Verbrauch mehr vorhanden, wird der Reaktor auf Raumtemperatur abgekühlt bzw. aufgeheizt und erst danach eventuell vorhandener Über- oder Unterdruck zum Sicherheitswäscher abgelassen. Der Gasauslass befindet sich ebenfalls über dem Füllniveau des Reaktors. Es wird so lange mit N₂ gespült, bis allfällig vorhandene Restmengen an Prozessgas im Kopfraum entfernt wurden. Als Spülgas können auch andere geeignete Gase verwendet werden. Danach wird der Reaktor geöffnet und das entstandene Gold abfiltriert. Dazu kann das Gold im Reaktor aufgeschlämmt und dann aus dem Reaktor abgelassen werden.

Der abfiltrierte Goldschwamm kann in einem separaten Waschreaktor gewaschen werden. Dieser wird dabei in 2 bis 16 Gew.-% HCl bei ca. 80 °C ca. 5 bis 30 min lang ausgekocht, wobei der auszukochende Goldschwamm aufgeschlämmt wird. Der Goldschwamm weist durch die vorangegangene Fällung mittels des "Oberflächenbegasungs"-Verfahrens eine gleichmäßige Teilchengröße auf und klumpt auch nach dem Absetzen nicht zusammen. Nach Abkühlung auf Raumtemperatur wird die HCl-Lösung abgepumpt. Der Auskochprozess kann wiederholt werden, in der Regel genügt, wenn überhaupt, ein Kochvorgang. Es wird entionisiertes Wasser hinzugefügt und der Goldschwamm erneut aufgeschlämmt und gewaschen. Danach wird das entionisiertem Wasser abgepumpt und eine neue Waschwassercharge hinzudosiert. Das Reinigungsverfahren wird beendet, wenn der pH-Wert der Spüllösung 6 bis 7 erreicht hat. Üblicherweise ist dies nach 2 bis 4 Waschzyklen mit entionisiertem Wasser der Fall. Abschließend wird der Goldschwamm noch einmal filtriert.

Das gewonnene Gold weist beispielsweise folgende Zusammensetzung auf:
Gold: ≥ 99,99 %
Silber: 48,1 ppm
Eisen: 1,1 ppm

Der Überstand enthält u.a. die folgenden Metalle:
Gold: 0,4 mg/l
Silber: 26,7 ppm
Eisen: 0,5 ppm

### Beispiel 2

Herstellung von Tetrachlorgoldsäure-Lösung aus Goldlegierungen mit einem Goldgehalt von ≥ 98 Gew.-% mittels eines als "Dissolvomat Au" bezeichneten Reaktors und Gewinnung von Gold aus dieser Lösung

Ein mit einem Rührer, einer Temperaturregelanlage, zwei Gaseinlässen (Cl₂, N₂), einem Gasauslass, zwei Flüssigkeitseinlässen (HCl und/oder HBr, entionisiertes Wasser), mit oder ohne Flüssigkeitsauslass, einem Druckmessgerät, Durchflussmessgeräten für Flüssigkeiten und Gase und Strömungsstörmittel ausgestatteter Reaktor mit einem Nennvolumen von 400 l wird mit oben genannter Goldlegierung befüllt. Es kann auch ein kleinerer Reaktor verwendet werden, z.B. können in einen kleineren Reaktor mit einem Nennvolumen von 250 l mit oben genannter Goldlegierung befüllt werden. Die Reaktorgröße ist skalierbar, ein Bereich von 15 bis 1200 I hat sich als vorteilhaft erwiesen, die Reaktorgröße kann jedoch je nach gewünschter Ausgangsmenge skaliert werden. Die eingesetzte Goldlegierung liegt vorzugsweise in Granalien vor. Die Lösegeschwindigkeit wird von der effektiven Gesamtoberfläche bestimmt. Der Reaktor wird verschlossen, und stöchiometrisch oder überstöchiometrisch benötigte Mengen an HCl und/oder HBr werden entsprechend der befüllten Menge der Goldlegierung und der in der Steuerung gewählten Vorgaben für die zu erzielende Goldkonzentration, z.B. 380 g/l, und Volumen der Goldlösung, z.B. 385 l, zudosiert.

Danach wird das Gas im Kopfraum fast vollständig durch Prozessgas ersetzt oder mit Prozessgas befüllt. Das Prozessgas wird durch den Gaseinlass eingeleitet. Der Gaseinlass befindet sich über dem Füllniveau des Reaktors (Oberflächenbegasung). Das Prozessgas besteht vorzugsweise aus Cl₂ in technischer Qualität. Wird der Kopfraum nur zu einem geringen Anteil mit Prozessgas ersetzt, z.B. nur zu ca. 30%, so berührt dies den Prozess von Prinzip wegen nicht, jedoch können sich die Zeit-/Ausbeutekurven wesentlich verringern. Jetzt wird die Rührung eingeschaltet und das Gemisch entsprechend dem Reaktorfüllgrad und Begasungsprinzip mit 50 bis 400 U/min gerührt. Die Reaktortemperatur wird von der Steuerung entsprechend einem Temperaturprofil zwischen 35 °C und 98 °C gesteuert. Das Auflösen des Golds erfolgt z.B. im System HCl/Cl₂ nach Reaktionsgleichung (II):

2Au + 2HCl + 3Cl₂ --> 2H[AuCl₄] (II)

Das Cl₂ wird durch die Reaktion mit der Goldlegierung als Oxidationsmittel verbraucht, was sich in einem Druckabfall bemerkbar macht. Der Druck im Reaktor beträgt ca. 0,2 bis 1 bar, bei Einsatz von entsprechenden Email- anstelle von Glasapparaten ca. 0,2 bis zu 6 bar. Verbrauchsraten von Cl₂ schwanken während des Prozesses von 0,1 bis zu 40 kg/h. Das Prozessgas wird entsprechend nachdosiert, bis kein Cl₂-Verbrauch mehr messbar ist. Im Normalbetrieb des Löseprozesses bleibt das Lösesystem geschlossen - ein Entlassen von Prozessgas erfolgt nicht. Die erzielbaren Lösegeschwindigkeiten sind denen des Königswasserprozesses ähnlich, beispielsweise können in einem 400-l-Reaktor 125 kg Gold innerhalb von 6 bis 10 Stunden aufgelöst werden.

Ist kein Cl₂-Verbrauch mehr vorhanden, wird der Reaktor auf Raumtemperatur abgekühlt, danach eventuell vorhandener Über- oder Unterdruck zum Sicherheitswäscher abgelassen. Der Gasauslass befindet sich ebenfalls über dem Füllniveau des Reaktors. Es wird so lange mit N₂ gespült, bis allfällig vorhandene Restmengen an Prozessgas im Kopfraum entfernt wurden. Als Spülgas können auch andere geeignete Gase verwendet werden. Danach wird der Reaktor geöffnet und die entstandene Goldlösung kann entnommen und das unlösliche AgCl abfiltriert werden.

Die Gewinnung von Gold aus dieser Lösung erfolgt wie in Beispiel 1 beschrieben. Dieses Verfahren funktioniert auch mit Goldlegierungen mit einem Goldgehalt von < 98 Gew.-%, z.B. für die Herstellung von Goldrohlösungen oder Goldelektrolyt. In diesem Fall führt jedoch die Weiterverarbeitung derartiger Lösungen gemäß Beispiel 1 allenfalls zu reinheitsmäßig schlechteren Ergebnissen.

### Beispiel 3

Herstellung von Tetrachlorgoldsäure-Lösung aus Goldlegierungen mit einem Goldgehalt von ≥ 98 Gew.-% mittels eines als "Dissolvomat Au" bezeichneten Reaktors mit integrierter HCl-Rückgewinnung und Gewinnung von Gold aus dieser Lösung.

Das Verfahren wird wie in Beispiel 2 beschrieben durchgeführt, jedoch wird vor dem Abkühlen des Reaktors auf Raumtemperatur ein Teil der in Lösung befindlichen HCl und/oder HBr abdestilliert und in einer in dem "Dissolvomat Au" integrierten Kondensationseinheit für HCl/HBr aufgefangen. Die erzielbare HCl-Konzentration und -Menge ergibt sich aus der Konzentration der freien HCl der im Reaktor befindlichen Goldsäure und der Menge derselben. Üblicherweise können, je nach Reaktorgröße und produziertem Goldlösungsvolumen, 30 bis 150 l HCl mit einer Konzentration von 16 bis 21 Gew.-% zurückgewonnen und rezykliert werden. Die "Dissolvomat Au"-Steuerung berücksichtigt die aufgefangene HCl beim nachfolgenden Lauf und dosiert entsprechend weniger frische HCl zu. Auch während der HCl-Rückgewinnung bleibt das gesamte Lösesystem "Dissolvomat Au" im Normalbetrieb geschlossen - ein Entlassen von Prozessgas oder HCl-Dämpfen erfolgt nicht. Statt HCl kann auch HBr oder HCl/HBr rückgewonnen werden.

Durch das oben angeführte Verfahren werden folgende Vorteile erreicht:
- der freie HCl-Gehalt in Goldsäure verringert sich, daraus folgt eine geringere Löslichkeit für AgCl
- die aufgefangene HCl wird rezykliert, das heißt allfällige Spuren von Goldchlorid in der HCl verbleiben im Lösesystem selbst ("geschlossener Kreislauf").
- das Goldlösen als auch die Rückgewinnung von HCl erfolgt im geschlossenen System und kann innerhalb einer einzigen Anlage erfolgen.
Dasselbe gilt für HBr.

Die Gewinnung von Gold aus dieser Lösung erfolgt wie in Beispiel 1 beschrieben.

### Beispiel 4

Gewinnung von Gold aus Goldlegierungen mit signifikanten Mengen an Platingruppenmetallen (Pt, Pd, Ir, Rh, Ru etc.), in weiterer Folge als "PGMs" bezeichnet, mittels eines als "Dissolvomat PGM" bezeichneten Reaktors.

Die Herstellung der Tetrachlorgoldsäure erfolgt wie in Beispiel 2 und/oder 3 beschrieben, wobei der Gehalt an Gold und Platingruppenmetallen in der Legierung zusammen ≥ 98 Gew.-% beträgt. Die Gegenwart von Platingruppenmetallen beeinflusst das Verfahrensprinzip dieser Löseapparatur für PGM-haltige Goldlegierungen nicht. Die Platingruppenmetalle gehen im Lösesystem HCl/Cl₂ und/oder HBr/Cl₂ ähnlich wie das Gold in Lösung. Es entsteht eine salzsaure Lösung im Wesentlichen bestehend aus Au(III), Pt(IV), Pd(II), Rh(III), Ir(IV), Ag(I), Ru(III). Das Auflösen beispielsweise von Platin im System HCl/Cl₂ erfolgt nach Reaktionsgleichung (III):

Pt + 2HCl + 2Cl₂ --> H[PtCl₆] (III)

Allfällige AgCl-Rückstände werden vor der Goldgewinnung abfiltriert.

Die Goldgewinnung erfolgt wie in Beispiel 1 beschrieben. Die Gegenwart von Platingruppenmetallen beeinflusst das in Beispiel 1 beschriebene Verfahrensprinzip nicht, da das SO₂ das Gold selektiv fällt. Die Platingruppenmetalle bleiben dabei in Lösung und können in weiteren, nachfolgenden Schritten nach bekannten chemischen Methoden (Ullmanns Enzyklopädie der technischen Chemie, Band 18, (1979)) selektiv gefällt werden, zum Beispiel:
- 1. Schritt: Oxidieren mit Cl₂, Reduzieren des Ir(IV), Fällen mit NH₄Cl.
   Präzipitat: (NH₄)₂PtCl₆, dieses kann z.B. mit H₂ oder Glühen zu Platin reduziert werden.
   In der Lösung verbleiben Pd(II), Rh(III), Ir(III), Ru(III).
- 2. Schritt: Oxidation des Ir(III).
   Präzipitat: (NH₄)₂IrCl₆, dieses kann z.B. mit H₂ oder Glühen zu Iridium reduziert werden.
   In der Lösung verbleiben Pd(II), Rh(III), Ru(III)
- 3. Schritt: Oxidation mit Cl₂, Fällen mit NH₄Cl.
   Präzipitat: (NH₄)₂PdCl₆, dieses kann z.B. mit H₂ oder Glühen zu Palladium reduziert werden.
   In der Lösung verbleiben Rh(III), Ru(IV).
- 4. Schritt: Kristallisieren.
   Kristallat: (NH₄)₂RhCl₆, dieses kann z.B. mit H₂ zu Rhodium reduziert werden.
   In der Lösung verbleibt Ru(IV).
- 5. Schritt: Entfernen von NH₄⁺, oxidierende Destillation.
   Destillat: RuO₄.

Dieses Verfahren funktioniert auch mit einem Gehalt an Gold und Platingruppenmetallen in der Legierung zusammen von < 98 Gew.-%. In diesem Fall führt jedoch die Weiterverarbeitung derartiger Lösungen gemäß Beispiel 1 allenfalls zu reinheitsmäßig schlechteren Ergebnissen.

### Beispiel 5 (nicht erfindungsgemäß)

Lösen von Legierungen, die mehrheitlich oder zur Gänze aus Platingruppenmetallen (Pt, Pd, Ir, Rh, Ru, etc.) bestehen, mittels eines als "Dissolvomat PGM" bezeichneten Reaktors und Gewinnung von geeigneten Lösungen für die spätere selektive Fällung der Metalle

Das Auflösen erfolgt für Platingruppenmetalle mittels "Dissolvomat PGM" nach dem gleichen verfahrenstechnischen Prinzip und ähnlichen Prozessparametern wie für Goldlegierungen mit dem "Dissolvomat Au" wie in Beispiel 2, 3 und 4 beschrieben, wobei der Gehalt an Platingruppenmetallen in der Legierung zusammen ≥ 85 Gew.-% beträgt. Das Auflösen von zum Beispiel Platin im System HCl/Cl₂ erfolgt nach Reaktionsgleichung (III). Es entsteht eine salzsaure Lösung im Wesentlichen bestehend aus Pt(IV), Pd(II), Rh(III), Ir(IV), Ag(I), Ru(III) und sofern vorhanden Au(III).

Allfällige AgCl-Rückstände werden nach dem Löseprozess abfiltriert. Bei Vorhandensein von Gold wird dieses wie in Beispiel 1 und 4 beschrieben zuerst mittels SO₂ selektiv ausgefällt. Danach können die einzelnen Platingruppenmetalle selektiv und nach bekannten chemischen Methoden, wie schon in Beispiel 4 erwähnt, gefällt werden.

Dieses Verfahren funktioniert auch mit Gehalt an Gold und Platingruppenmetallen in der Legierung zusammen von < 85 Gew.-%. In diesem Fall führt jedoch die Weiterverarbeitung derartiger Lösungen gemäß Beispiel 1 allenfalls zu reinheitsmäßig schlechteren Ergebnissen.

### Beispiel 6 (nicht erfindungsgemäß)

Gewinnung von Silberlösungen und Gold aus Silber-/Goldlegierungen auf Basis einer Salpetersäure-Scheidung

Ein mit einem Rührer, einer Temperaturregelanlage, zwei Gaseinlässen (O₂, N₂), einem Gasauslass, zwei Flüssigkeitseinlässen (HNO₃, entionisiertes Wasser), mit oder ohne Flüssigkeitsauslass, einem Druckmessgerät und Strömungsstörmittel ausgestatteter Reaktor mit einem Nennvolumen von 50 bis 2000 l, der als "Dissolvomat Ag" bezeichnet wird, wird mit einer Silberlegierung befüllt. Die eingesetzte Silberlegierung liegt vorzugsweise in Granalien vor, der Goldanteil beträgt bis zu 25 Gew.-% (Salpeter-Säurescheidung, Ullmanns Enzyklopädie der technischen Chemie, Band 12, (1979)). Der Reaktor wird verschlossen. Die stöchiometrisch oder überstöchiometrisch benötigte Menge an HNO₃ wird entsprechend der befüllten Menge der Silberlegierung und der in der Steuerung gewählten Vorgaben für die zu erzielende Silbernitratendkonzentration, freien Salpetersäuregehalt usw., zu Beginn und/oder über den Prozess verteilt zudosiert.

Nach dem Reaktorverschluss wird das Gas im Kopfraum fast vollständig durch Prozessgas ersetzt oder der Kopfraum mit Prozessgas befüllt. Das Prozessgas wird durch den Gaseinlass eingeleitet, welcher sich über dem Flüssigkeitsniveau des Reaktors befindet. Das Prozessgas besteht vorzugsweise aus O₂ in technischer Qualität. Wird der Kopfraum nur zu einem geringen Anteil mit Prozessgas ersetzt, z.B. nur zu ca. 30%, so berührt dies den Prozess von Prinzip wegen nicht, jedoch können sich die Zeit-/Ausbeutekurven wesentlich verringern. Die Reaktorgröße kann je nach gewünschter Ausgangsmenge skaliert werden. Jetzt wird die Rührung eingeschaltet und das Gemisch entsprechend dem Reaktorfüllgrad mit 5 bis 600 U/min gerührt. Die Reaktortemperatur wird von der Steuerung entsprechend einem Temperaturprofil zwischen 35 °C und 130 °C gesteuert. Das O₂ wird durch die Reaktion mit der Silberlegierung als Oxidationsmittel verbraucht, was sich in einem Druckabfall bemerkbar macht. Der Druck im Reaktor beträgt ca. 0,1 - 10 bar. Verbrauchsraten von O₂ schwanken während des Prozesses von 0,1 bis zu 60 kg/h. Silber und allfällige andere Nichteisenmetalle gehen in Lösung. Gold löst sich nicht. Der Lösungsprozess läuft zusammengefasst nach folgender Reaktionsgleichung (IV) ab:

4Ag + 4HNO₃ + O₂ + 1Au --> 4AgNO₃ + 2H₂O + 1Au(s) (IV)

Das Prozessgas wird entsprechend nachdosiert, bis kein O₂-Verbrauch mehr messbar ist. Bei der Lösereaktion selbst wird die Bildung von Stickstoffoxiden mehrheitlich, je nach gefahrenem Druckbereich unter Umständen jedoch nicht vollständig, unterdrückt. Im Normalbetrieb des Löseprozesses bleibt das Lösesystem jedoch geschlossen - ein Entlassen von Prozessgas bzw. von möglichen Stickstoffoxiden erfolgt nicht. Das Lösen erfolgt daher de facto frei von Stickstoffoxiden. Ist kein O₂-Verbrauch mehr vorhanden, wird der Reaktor auf Raumtemperatur abgekühlt, danach eventuell vorhandener Überdruck zum Sicherheitswäscher abgelassen und der Reaktor geöffnet. Das unlösliche Gold wird von der silberreichen Nitratlösung abfiltriert und zwecks Entfernung der nitratischen Lösungsanteile gewaschen. Je nach eingestellten Zielprozessparameter beträgt der Silbergehalt in der Lösung ca. 100 bis 1150 g/l, der freie Salpetersäuregehalt ca. 0,1 bis 10 Gew.-%. Der abfiltrierte Goldrückstand hat eine Konzentration von 93 - 99,8 Gew.-%.

Bei Einstellung geeigneter Prozessparameter für eine Salpetersäure-Scheidung, z.B. Silber/Gold-Verhältnis, beträgt der Goldgehalt des Goldrückstands ≥ 98 Gew.-%. Daraus kann Feingold wie in Beispiel 1 und 2 beschrieben gewonnen werden.

### Beispiel 7 (nicht erfindungsgemäß)

Lösen von Silberlegierungen (Silber-Doré) mit Goldgehalten, welche z.B. den für die konventionelle Salpetersäure-Scheidung üblichen Goldgehalt wesentlich unterschreiten, oder Silberlegierungen, bei welchen der Goldgehalt vernachlässigbar oder Null ist, mittels eines als "Dissolvomat Ag" bezeichneten Reaktors und Gewinnung von silberreicher Nitratlösung zu deren späteren Verwendung innerhalb einer Silberraffinerie

Das Auflösen für derartige Silberlegierungen (Silber-Doré) erfolgt mittels eines als "Dissolvomat Ag" bezeichneten Reaktors nach dem gleichen verfahrenstechnischen Prinzip wie in Beispiel 6 beschrieben, wobei der Gehalt an Silber ≥ 70Gew.-% sein soll.

Bei geringen oder keinen Goldgehalten gilt das Hauptaugenmerk dieses Verfahrens der Gewinnung von Silbernitratlösungen, z.B. für nach dem Moebiusverfahren arbeitende Silberelektrolysen. Im Gegensatz zu konventionellen Prozessen kann das Silber-Dore im Normalbetrieb de facto frei von jeglichen Stickstoffoxiden gelöst werden. Zudem kann das Verfahren das Silber-Dore schon bei geringem Salpetersäureüberschuss von ca. 0,5 bis 3 Gew.-% effizient lösen. Eine Charge von 500 kg Silber-Dore lässt sich beispielsweise innerhalb von 5-8 Stunden lösen.

Die erhaltene silberreiche Nitratlösung kann, je nach Qualität des aufgelösten Silber-Dore, z.B. als Silberelektrolyt direkt verwendet oder nach bekannten chemischen Verfahren weiter aufgereinigt oder zur hydrometallurgischen Feinsilbergewinnung verwendet werden.

Das Gold bleibt, von seiner Quantität unabhängig, wiederum als unlöslicher Rückstand und wird abfiltriert. Das Gold wird, je nach Goldgehalt, wie in Beispiel 6 beschrieben weiter aufgereinigt oder anderen geeigneten Prozesskreisläufen, z.B. Miteinschmelzen zu Goldanoden, zugeführt.

### Beispiel 8 (nicht erfindungsgemäß)

Lösen und Aufreinigung von Lithiumcarbonat mittels eines als "Dissolvomat Li" bezeichneten Reaktors.

Ein mit einem Rührer, einer Temperaturregelanlage, zwei Gaseinlässen (CO₂, N₂), die sich über dem Flüssigkeitsniveau des Reaktors befinden, einem Gasauslass, zwei Flüssigkeitseinlässen (LiHCO₃- und/oder Li₂CO₃-Lösung und/oder aufgeschlämmtes Li₂CO₃, entionisiertes/Na-freies Wasser), mit oder ohne Flüssigkeitsauslass, einem Druckmessgerät und Strömungsstörmittel ausgestatteter Reaktor mit einem Nennvolumen von 50 bis 10000 l, der als "Dissolvomat Li" bezeichnet wird, wird mit Wasser oder rückgeführter, entsprechend ihrem Lösungsgleichgewicht bei Raumtemperatur oder höheren Temperaturen konzentrierter LiHCO₃- und/oder Li₂CO₃-Lösung befüllt. Die Reaktorgröße kann je nach gewünschter Ausgangsmenge skaliert werden. Li₂CO₃ wird als Feststoff oder in aufgeschlämmter Form zudosiert. Die Menge des eingefüllten Li₂CO₃ richtet sich nach dem Reaktorvolumen, der Quantität einer allfällig rückgeführten LiHCO₃- und/oder Li₂CO₃-Lösung sowie der maximal löslichen Li₂CO₃-Menge unter "Dissolvomat Li"-Prozessbedingungen.

Der Reaktor wird verschlossen und das Gas im Kopfraum wird fast vollständig durch Prozessgas ersetzt oder der Kopfraum mit Prozessgas befüllt. Das Prozessgas wird durch den Gaseinlass eingeleitet. Das Prozessgas besteht vorzugsweise aus CO₂ in technischer Qualität. Wird der Kopfraum nur zu einem geringen Anteil mit Prozessgas ersetzt, z.B. nur zu ca. 30 %, so berührt dies den Prozess von Prinzip wegen nicht, jedoch können sich die Zeit-/Ausbeutekurven wesentlich verringern. Jetzt wird die Rührung eingeschaltet und das Gemisch entsprechend dem Reaktorfüllgrad mit 5 bis 1000 U/min gerührt. Die Reaktortemperatur wird von der Steuerung entsprechend einem Temperaturprofil zwischen -10 °C und 110 °C gesteuert. Das zugeführte Li₂CO₃ löst sich unter Bildung von LiHCO₃ in kohlensäurehaltigem Wasser, z.B. ≥ 70 g/l Li₂CO₃ bei 1 bar CO₂ (Ullmanns Enzyklopädie der technischen Chemie, Band 16, (1974-1978)) gemäß der Reaktionsgleichung (V):

H₂O + CO₂ + Li₂CO₃ --> 2 LiHCO₃ (V)

Das Lösen des eingesetzten CO₂ macht sich in einem Druckabfall bemerkbar. Der Druck im Reaktor beträgt ca. 0,1 - 10 bar. Verbrauchsraten von CO₂ schwanken während des Prozesses von 0,1 bis zu 30 kg/h. Im Normalbetrieb des Löseprozesses bleibt das Lösesystem geschlossen - ein Entlassen von Prozessgas erfolgt nicht. Das Auflösen von Li₂CO₃ erfolgt bevorzugt bei Temperaturen kleiner als Raumtemperatur, z.B. bei ca. -5 bis +5°C. Das Prozessgas wird entsprechend nachdosiert, bis kein CO₂-Verbrauch mehr messbar ist.

Danach wird der "Dissolvomat Li" druckentlastet, das noch im Reaktorkopfraum befindliche CO₂ kann allenfalls aufgefangen und wiederverwendet werden. Die Reaktortemperatur wird gemäß einem Temperaturprofil auf 75-100°C erhöht. Dabei fällt das aufgereinigtes Li₂CO₃ entsprechend seinem Lösungsgleichgewicht gemäß Reaktionsgleichung (VI) aus:

2LiHCO₃ --> Li₂CO₃ + CO₂ + H₂O (VI)

Das ausgefallene Li₂CO₃ wird, vorzugsweise heiß bei 70 bis 95°C, abfiltriert und anschließend mit entionisiertem Wasser gewaschen. Davor wird allfällig im Reaktorkopfraum verbliebenes Prozessgas wie in den Beispielen zuvor beschrieben entfernt. Der Überstand enthält dann ca. 0,7 g/l Li₂CO₃. Dies entspricht einer Ausbeute an aufgereinigtem Li₂CO₃ von ≥ 99,85 %.

Für einen 400-l-Reaktor können so z.B. ≥ 28 kg Li₂CO₃ pro Charge aufgereinigt werden, für einen 2500-l-Reaktor entsprechend ≥ 175 kg Li₂CO₃ pro Charge. Ausgehend von Li₂CO₃ chemischer Reinheit kann in einem ersten Schritt Li₂CO₃ mit niedrigem Na-Gehalt erzeugt werden. Ausgehend von Li₂CO₃ mit niedrigem Na-Gehalt kann in einem zweiten Schritt hochreines Li₂CO₃ erzeugt werden. Die Zusammensetzung von Li₂CO₃ chemischer Reinheit, Li₂CO₃ mit niedrigem Na-Gehalt und hochreinem Li₂CO₃ kann nachfolgender Tabelle entnommen werden.

**Tabelle 1**

| Chemische Zusammensetzung von Li₂CO₃ unterschiedlicher Reinheit | | | |
|---|---|---|---|
| | Li₂CO₃ chemischer Reinheit | Li₂CO₃ mit niedrigem Na-Gehalt | hochreines Li₂CO₃ |
| % Li₂CO₃ | 99,38 ± 0,026 | 99,4 | 99,995 |
| % Mg | 0,004 ± 0,0006 | 0,0005 ± 0,0002 | 0,00001 |
| % Na | 0,069 ± 0,005 | 0,0002 ± 0,001 | 0,0002 |
| % K | 0,0003 ± 0,00002 | 0,00015 ± 0,0001 | 0,00015 |
| % Ca | 0,014 ± 0,001 | 0,012 ± 0,0014 | 0,00007 |
| % SO₄ | 0,037 ± 0,003 | 0,003 ± 0,037 | 0,003 |
| % B | 0,0003 ± 0,00001 | < 0,0001 | < 0,0001 |

Dieses Verfahren funktioniert von Prinzip wegen auch zur Aufreinigung von Li₂CO₃, wenn mit geringerer Qualität als chemisch rein eingesetzt. Zur Erreichung der oben benannten Qualitäten ist dann eine entsprechende Prozesswiederholung notwendig.

## Patentansprüche

1. Metalltrennungsverfahren, umfassend folgende Schritte:
+ Einbringen des zu trennenden Metalls gemeinsam mit einer Flüssigkeit in einen Reaktor;
+ Hinzufügen von mit dem zu trennenden Metall reagierendem Prozessgas und Vermischen,
+ Gewinnung des zu trennenden Metalls,
**dadurch gekennzeichnet, dass**
das Vermischen von Flüssigkeit und Prozessgas nach dem "Oberflächenbegasungs"-Verfahren durchgeführt wird und
- das Gas über zumindest einen Gaseinlass über dem maximalen Füllniveau des Reaktors eingeleitet wird und über zumindest einen Gasauslass über dem maximalen Füllniveau des Reaktors abgeleitet wird;
- die Flüssigkeit über zumindest einen Flüssigkeitseinlass eingeleitet und über zumindest einen Flüssigkeitsauslass ausgeleitet wird, wobei die Ableitung vorzugsweise über den Boden des Reaktors erfolgt;
- die Flüssigkeit durch einen Rührer gerührt wird;
- wobei eine homogene Einrührung des Prozessgases durch zumindest ein Strömungsstörmittel im Zusammenspiel mit dem Rührer ermöglicht wird;
dass das zu trennende Metall aus einer das zu trennende Metall enthaltenden Lösung als Metall oder Metallsalz ausgefällt wird und
dass Gold ausgefällt wird, wobei das Verfahren folgende Schritte umfasst:
(i) Einbringen einer wässrigen Goldlösung über zumindest einen Flüssigkeitseinlass in einen Reaktor,
(ii) Verschließen des Reaktors,
(iii) Austausch des Gases im Kopfraum durch Prozessgas, das SO₂ umfasst,
wobei das Gas über zumindest einen Gaseinlass über dem maximalen Füllniveau des Reaktors eingeleitet wird und über zumindest einen Gasauslass über dem maximalen Füllniveau des Reaktors abgeleitet wird,
(iv) Rühren des Gemisches, wodurch eine Selbstbegasung (Oberflächenbegasung) des Gemisches erfolgt, wobei eine homogene Einrührung des Prozessgases durch zumindest ein Strömungsstörmittel im Zusammenspiel mit dem Rührer ermöglicht wird,
(v) Nachdosieren von Prozessgas je nach Bedarf,
(vi) Beenden der Umsetzung, wenn kein SO₂ mehr verbraucht wird,
(vii) Abkühlen/Erwärmen auf Raumtemperatur,
(viii) Gewinnen des Golds.

2. Metalltrennungsverfahren nach Anspruch 1, **dadurch gekennzeichnet, dass** die wässrige Goldlösung eine wässrige Lösung von H[AuCl₄] ist.

3. Metalltrennungsverfahren nach Anspruch 1 oder 2, **dadurch gekennzeichnet, dass** das Verfahren in einem Temperaturbereich von -10 bis +120 °C durchgeführt wird.

4. Metalltrennungsverfahren nach Anspruch 3, **dadurch gekennzeichnet, dass** das Verfahren in einem Temperaturbereich von 40 bis 90 °C durchgeführt wird.

5. Metalltrennungsverfahren nach einem der Ansprüche 1 bis 4, **dadurch gekennzeichnet, dass** der Druck durch Einlassen von Prozessgas bzw. Ablassen eines Überdrucks auf 0,05 bis 6 bar geregelt wird.

6. Metalltrennungsverfahren nach Anspruch 5, **dadurch gekennzeichnet, dass** der Druck durch Einlassen von Prozessgas bzw. Ablassen eines Überdrucks auf 0,5 bis 4 bar geregelt wird.

7. Metalltrennungsverfahren nach einem der Ansprüche 1 bis 6, **dadurch gekennzeichnet, dass** das Rühren mit einer Geschwindigkeit von 10 bis 800 U/min erfolgt.

8. Metalltrennungsverfahren nach Anspruch 7, **dadurch gekennzeichnet, dass** das Rühren mit einer Geschwindigkeit von 100 bis 300 U/min erfolgt.

9. Metalltrennungsverfahren nach einem der Ansprüche 1 bis 8, **dadurch gekennzeichnet, dass** nach Schritt (viii) die im Überstand verbliebenen Edelmetalle gewonnen werden, und zwar durch folgende Schritte:
- 1. Schritt: Oxidieren mit Cl₂, Reduzieren des Ir(IV), Fällen mit NH₄Cl, wobei als Präzipitat (NH₄)₂PtCl₆ erhalten wird, welches z.B. mit H₂ oder Glühen zu Platin reduziert werden kann, wobei in der Lösung Pd(II), Rh(III), Ir(III), Ru(III) verbleiben;
- 2. Schritt: Oxidation des Ir(III), wobei als Präzipitat (NH₄)₂IrCl₆ erhalten wird, welches z.B. mit H₂ oder Glühen zu Iridium reduziert werden kann, wobei in der Lösung Pd(II), Rh(III), Ru(III) verbleiben;
- 3. Schritt: Oxidation mit Cl₂, Fällen mit NH₄Cl, wobei als Präzipitat (NH₄)₂PdCl₆ erhalten wird, welches z.B. mit H₂ oder Glühen zu Palladium reduziert werden kann, wobei in der Lösung Rh(III), Ru(IV) verbleiben;
- 4. Schritt: Kristallisieren, wobei als Kristallat (NH₄)₂RhCl₆ erhalten wird, welches z.B. mit H₂ zu Rhodium reduziert werden kann, wobei in der Lösung Ru(IV) verbleibt;
- 5. Schritt: Entfernen von NH₄⁺, oxidierende Destillation, wobei als Destillat RuO₄ erhalten wird.

10. Metalltrennungsverfahren nach einem der Ansprüche 1 bis 9, **dadurch gekennzeichnet, dass** das Gold durch Filtration gewonnen wird.

11. Metalltrennungsverfahren nach einem der Ansprüche 1 bis 10, **dadurch gekennzeichnet, dass** die wässrige Goldlösung einen Goldgehalt von 5 bis 450 g/l aufweist.

12. Metalltrennungsverfahren nach Anspruch 11, **dadurch gekennzeichnet, dass** die wässrige Goldlösung einen Goldgehalt von 150 bis 400 g/l aufweist.

13. Metalltrennungsverfahren nach einem der Ansprüche 1 bis 12, **dadurch gekennzeichnet, dass** vor Schritt (i) die wässrige Goldlösung wie folgt gewonnen wird:
a) durch Lösen von Gold mit Cl₂ in HCl und/oder HBr; oder
b) durch Lösen von Gold in Königswasser und anschließendes Entfernen des Nitrats; oder
c) elektrochemisches Lösen von Gold.

## Claims

1. A metal separation process, comprising the following steps:
+ introducing the metal to be separated together with a liquid into a reactor;
+ adding process gas reacting with the metal to be separated and mixing;
+ recovering the metal to be separated,
**characterized in that**
the mixing of liquid and process gas is achieved by means of the "surface effect gassing" method and
- gas is introduced via at least one gas inlet above the maximum filling level of the reactor and discharged via at least one gas outlet above the maximum filling level of the reactor;
- the liquid is introduced via at least one liquid inlet and discharged via at least one liquid outlet, wherein the discharging is preferably effected via the bottom of the reactor;
- the liquid is stirred with a stirrer;
- wherein homogeneous stirring in of the process gas is allowed via at least one flow interrupting means (baffle) in combination with the stirrer;
wherein the metal to be separated is precipitated from a solution containing the metal to be separated in the form of the metal or a metal salt; and
wherein gold is precipitated, the process comprising the following steps:
(i) introducing an aqueous gold solution into a reactor via at least one liquid inlet,
(ii) sealing the reactor,
(iii) exchanging the gas in the headspace by a process gas which comprises SO₂, wherein the gas is introduced via at least one gas inlet above the maximum filling level of the reactor and discharged via at least one gas outlet above the maximum filling level of the reactor,
(iv) stirring the mixture, resulting in a self-aspirated gassing of the mixture according to the method of surface effect gassing, wherein a homogeneous stirring in of the process gas is allowed via at least one flow interrupting means (baffle) in combination with the stirrer,
(v) adding additional process gas, as required,
(vi) completing the conversion, if SO₂ is no longer consumed,
(vii) cooling/warming to room temperature,
(viii) recovering the gold.

2. The metal separation process according to claim 1, **characterized in that** the aqueous gold solution is an aqueous solution of H[AuCl₄].

3. The metal separation process according to claim 1 or 2, **characterized in that** the process is carried out at a temperature ranging from -10 to +120 °C.

4. The metal separation process according to claim 3, **characterized in that** the process is carried out at a temperature ranging from 40 to 90 °C.

5. The metal separation process according to any one of the claims 1 to 4, **characterized in that** the pressure is adjusted to 0.05 to 6 bar by supplying process gas or by letting off excess pressure.

6. The metal separation process according to claim 5, **characterized in that** the pressure is adjusted to 0.5 to 4 bar by supplying process gas or by letting off excess pressure.

7. The metal separation process according to any one of the claims 1 to 6, **characterized in that** the stirring rate amounts to 10 to 800 rpm.

8. The metal separation process according to claim 7, **characterized in that** the stirring rate amounts to 100 to 300 rpm.

9. The metal separation process according to any one of the claims 1 to 8, **characterized in that** the precious metals remaining in the residue are recovered after step (viii) by the following steps:
- Step 1: oxidizing with Cl₂, reducing of Ir(IV), precipitating with NH₄Cl, wherein (NH₄)₂PtCl₆ is obtained as a precipitate, which can be reduced to platinum, e.g., with H₂ or by tempering, wherein Pd(II), Rh(III), Ir(III), Ru(III) remain in solution;
- Step 2: oxidizing of Ir(III), wherein (NH₄)₂IrCl₆ is obtained as a precipitate, which can be reduced to iridium, e.g., with H₂ or by tempering, wherein Pd(II), Rh(III), Ru(III) remain in solution;
- Step 3: oxidizing with Cl₂, precipitating with NH₄Cl, wherein (NH₄)₂PdCl₆ is obtained as a precipitate, which can be reduced to palladium, e.g., with H₂ or by tempering, wherein Rh(III), Ru(IV) remain in solution;
- Step 4: crystallizing, wherein (NH₄)₂RhCl₆ is obtained as a crystallizate, which can be reduced to rhodium, e.g., with H₂, wherein Ru(IV) remains in solution;
- Step 5: removing of NH₄⁺, oxidizing distillation, wherein RuO₄ is obtained as a distillation product.

10. The metal separation process according to any one of the claims 1 to 9, **characterized in that** the gold is recovered by means of filtration.

11. The metal separation process according to any one of the claims 1 to 10, **characterized in that** the aqueous gold solution has a gold content of 5 to 450 g/l.

12. The metal separation process according to claim 11, **characterized in that** the aqueous gold solution has a gold content of 150 to 400 g/l.

13. The metal separation process according to any one of the claims 1 to 12, **characterized in that**, before step (i), the aqueous gold solution is obtained as follows:
a) by dissolving gold using Cl₂ in HCl and/or HBr; or
b) by dissolving gold in aqua regia and, subsequently, removing the nitrate; or
c) by dissolving gold electrochemically.

## Revendications

1. Procédé de séparation de métal, comprenant les étapes suivantes:
+ introduction du métal destiné à être séparé dans un réacteur en combinaison avec un liquide;
+ addition de gaz de procédé réagissant avec le métal destiné á être séparé et mélange;
+ obtention du métal destiné à être séparé;
**caractérisé en ce que**
le mélange de liquide et gaz de procédé est effectué selon le «procédé de gazage de surface» et **en ce que**
le gaz est introduit à travers au moins une entrée de gaz située au-dessus du niveau de remplissage maximal du réacteur et évacué à travers au moins une sortie de gaz située au-dessus du niveau de remplissage maximal du réacteur; **en ce que**
le liquide est introduit à travers au moins une entrée de liquide et évacué à travers au moins une sortie de liquide, l'évacuation étant effectuée de préférence par le fond du réacteur; **en ce que**
le liquide est agité par un agitateur;
une introduction homogène du gaz de procédé étant possible grâce à au moins un agent perturbateur de flux en interaction avec l'agitateur; **en ce que**
le métal destiné à être séparé étant précipité sous forme de métal ou sel métallique à partir d'une solution contenant le métal destiné à être séparé, et **en ce que**
de l'or est précipité, le procédé comprenant les étapes suivantes :
(i) introduction d'une solution aqueuse d'or dans un réacteur à travers au moins une entrée de liquide,
(ii) fermeture du réacteur,
(iii) remplacement des gaz dans la partie supérieure par du gaz de procédé comprenant du SO₂, le gaz étant introduit à travers d'au moins une entrée de gaz au-dessus du niveau de remplissage maximal du réacteur et évacué à travers au moins une sortie de gaz située au-dessus du niveau de remplissage maximal du réacteur;
(iv) agitation du mélange pour obtenir un auto-gazage (gazage de surface) du mélange, une introduction homogène du gaz de procédé étant possible grâce à au moins un agent perturbateur de flux en interaction avec l'agitateur,
(v) addition de gaz de procédé selon les besoins,
(vi) arrêt de la réaction lorsqu'aucun SO₂ n'est plus consommé,
(vii) refroidissement/réchauffement à température ambiante,
(viii) obtention de l'or.

2. Procédé de séparation de métal selon la revendication 1, **caractérisé en ce que** la solution aqueuse d'or est une solution aqueuse de H[AuCl₄].

3. Procédé de séparation de métal selon les revendications 1 ou 2, **caractérisé en ce que** le procédé est effectué dans une plage de température de -10 à +120 °C.

4. Procédé de séparation de métal selon la revendication 3, **caractérisé en ce que** le procédé est effectué dans une plage de température de 40 à 90 °C.

5. Procédé de séparation de métal selon une quelconque des revendications 1 à 4, **caractérisé en ce que** la pression est réglée à 0,05 à 6 bar par l'introduction de gaz de procédé et/ou par évacuation d'une surpression.

6. Procédé de séparation de métal selon la revendication 5, **caractérisé en ce que** la pression est réglée à 0,5 à 4 bar par l'introduction de gaz de procédé et/ou par évacuation d'une surpression.

7. Procédé de séparation de métal selon une quelconque des revendications 1 à 6, **caractérisé en ce que** l'agitation est effectuée avec une vitesse de 10 à 800 tr/min.

8. Procédé de séparation de métal selon la revendication 7, **caractérisé en ce que** l'agitation est effectuée avec une vitesse de 100 à 300 tr/min.

9. Procédé de séparation de métal selon une quelconque des revendications 1 à 8, **caractérisé en ce que**, après l'étape (viii), les métaux précieux restants dans le surnageant sont récupérés selon les étapes suivantes :
1^{ère} étape : oxydation avec du Cl₂, réduction de l'Ir(IV), précipitation avec du NH₄Cl, du (NH₄)₂PtCl₆ étant obtenu comme précipité, qui peut être réduit, p. ex. avec du H₂ ou par recuit, pour obtenir du platine, du Pd(III), du Rh(III), de l'Ir(III), du Ru(III) restant dans la solution;
2^{e} étape : oxydation de l'Ir(III), du (NH₄)₂IrCl₆ étant obtenu comme précipité, qui peut être réduit, p. ex. avec du H₂ ou par recuit, pour obtenir de l'iridium, du Pd(II), du Rh(III), du Ru(III) restant dans la solution;
3^{e} étape : oxydation avec du Cl₂, précipitation avec du NH₄Cl, du (NH₄)₂PdCl étant obtenu comme précipité, qui peut être réduit, p. ex. avec du H₂ ou par recuit, pour obtenir du palladium, du Rh(III), du Ru(IV) restant dans la solution;
4^{e} étape : cristallisation, du (NH₄)₂RhCl₆ étant obtenu comme produit de cristallisation, qui peut être réduit, p. ex. avec du H₂, pour obtenir du rhodium, du Ru(IV) restant dans la solution;
5^{e} étape : élimination du NH₄⁺, distillation oxydante, du RuO₄ étant obtenu comme produit de distillation.

10. Procédé de séparation de métal selon l'une quelconque des revendications 1 à 9, **caractérisé en ce que** l'or est obtenu par filtration.

11. Procédé de séparation de métal selon l'une quelconque des revendications 1 à 10, **caractérisé en ce que** la solution aqueuse d'or a un contenu en or de 5 à 450 g/l.

12. Procédé de séparation de métal selon la revendication 11, **caractérisé en ce que** la solution aqueuse d'or a un contenu en or de 150 à 400 g/l.

13. Procédé de séparation de métal selon l'une quelconque des revendications 1 à 12, **caractérisé en ce que**, avant l'étape (i), la solution aqueuse d'or est obtenue de la façon suivante :
a) par dissolution de l'or avec du Cl₂ en dans du HCl et/ou du HBr; ou
b) par dissolution de l'or dans de l'eau régale et ensuite par élimination du nitrate; ou
c) par dissolution électrochimique de l'or.
